# EUROPEAN PATENT SPECIFICATION

(11) **EP 4 636 549 B1**
(45) Date of publication and mention of the grant of the patent: **18.03.2026**
(21) Application number: 24170555.7
(22) Date of filing: 16.04.2024
(51) Int. Cl.: G06F 3/039, H01F 27/30, H02J 50/00, H02J 50/10, H01F 38/14

(54) **WIRELESS CHARGING MOUSE PAD AND COIL MODULE THEREOF**
DRAHTLOS AUFLADENDES MAUSPAD UND SPULENMODUL DAFÜR
TAPIS DE SOURIS CHARGEANT SANS FIL ET SON MODULE DE BOBINE

(43) Date of publication of application: 22.10.2025
(73) Proprietor: Dongguan Padmat Rubber Co., Ltd., Guangdong 523159 (CN)
(72) Inventor: ZHOU, Yu, DONGGUAN, 523159 (CN)
(74) Representative: 2K Patentanwälte Blasberg Kewitz & Reichel

(56) References cited:
- CN-A- 115 954 140
- DE-U1- 202019 102 434
- US-A1- 2024 242 882
- CHANG CHIN-WEI ET AL: "Embroidered Textile Coils for Wireless Charging of Smart Garments", 2021 IEEE WIRELESS POWER TRANSFER CONFERENCE (WPTC), IEEE, 1 June 2021 (2021-06-01), pages 1 - 4, XP033929465, DOI: 10.1109/WPTC51349.2021.9458167

## Description

### BACKGROUND

### Technical Field

The disclosure relates to a mouse pad structure, and particularly to a wireless charging mouse pad and a coil module thereof.

### Related Art

A wireless optical mouse, which has no wire connecting to a computer, is not restricted by a wire and can be freely slid, so it is popular in the public. However, the drawback of a wireless optical mouse is to consume more electric power than a mechanic mouse.

Thus, there is a mouse pad with a wireless charge function in the market. It uses a coil buried in the mouse pad to wirelessly charge the battery of the wirelessly chargeable optical mouse to solve the problem of the battery power consumption of the wireless optical mouse.

CN 115 954 140 A, CHANG CHIN-WEI ET AL: "Embroidered Textile Coils for Wireless Charging of Smart Garments", 2021 IEEE WIRELESS POWER TRANSFER CONFERENCE (WPTC), IEEE, 1 June 2021 (2021-06-01), pages 1-4, and DE 20 2019 102434 U1 disclose methods for wireless charging. CN 115 954 140 A discloses a wireless charging mouse pad comprising a first surface layer, a wireless charging coil structure disposed thereon, a second surface layer and a filling layer. The wireless charging coil structure is formed by sewing a conductive wire on a fabric.

However, a conventional wireless charging mouse pad needs to be disposed with multiple grooves to accommodate a coil, but the grooves disposed in a mouse pad will increase the manufacturing costs and the grooves will cause an uneven thickness to make the operating surface of the mouse pad uneven so as to result in problems of high manufacturing costs and defective finished products.

In view of this, the inventors have devoted themselves to the above-mentioned prior art, researched intensively and cooperated with the application of science to try to solve the above-mentioned problems. Finally, the invention which is reasonable and effective to overcome the above drawbacks is provided.

### SUMMARY

The disclosure provides a wireless charging mouse pad and a coil module thereof, which uses the induction coil sewed on the fabric element and the fabric element sandwiched between the first pad plate and the second pad plate to accomplish advantages of reducing the manufacturing costs and increasing the yield rate of finished products according to the claims.

The disclosure provides a wireless charging mouse pad, which includes a first pad plate, a second pad plate, a coil module and a surface layer. The coil module is sandwiched between the first pad plate and the second pad plate and includes a fabric element, an induction coil, a lead wire and a sewing wire. The fabric element has a first face and a second face, which are opposite to each other, and is disposed with multiple through holes penetrating through the first face and the second face. The induction coil is superposed on the first face. The lead wire is disposed on the second face and arranged correspondingly to the induction coil. The sewing wire is wound about the induction coil and penetrates through the multiple through holes to be tied with the lead wire so that the induction coil is sewed on the fabric element. The surface layer is covered on a surface of the first pad plate, which is away from the coil module.

The disclosure provides a coil module of a wireless charging mouse pad, which includes a fabric element, an induction coil, a lead wire and a sewing wire. The fabric element includes a first face and a second face, which are opposite to each other, and disposed with multiple through holes penetrating through the first face and the second face. The induction coil is superposed on the first face. The lead wire is disposed on the second face and arranged correspondingly to the induction coil. The sewing wire is wound about the induction coil and penetrates through the multiple through holes to be tied with the lead wire so that the induction coil is sewed on the fabric element.

Accordingly, the disclosure uses the induction coil sewed on the fabric element by the lead wire and the sewing wire and the coil module sandwiched between the first pad plate and the second pad plate to replace the manufacturing process of a related-art mouse pad which is disposed with multiple grooves to accommodate the coil to accomplish advantages of reducing the manufacturing costs and increasing the yield rate of finished products.

### BRIEF DESCRIPTION OF THE DRAWINGS

FIG. 1 is a top schematic view of the coil module of the disclosure;
FIG. 2 is a partially enlarged top schematic view of the coil module of the disclosure;
FIG. 3 is a partially enlarged perspective schematic view of the coil module of the disclosure;
FIG. 4 is a cross-sectional schematic view of the coil module of the disclosure;
FIG. 5 is a perspective assembled view of the wireless charging mouse pad of the disclosure; and
FIG. 6 is a cross-sectional schematic view of the wireless charging mouse pad of the disclosure.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

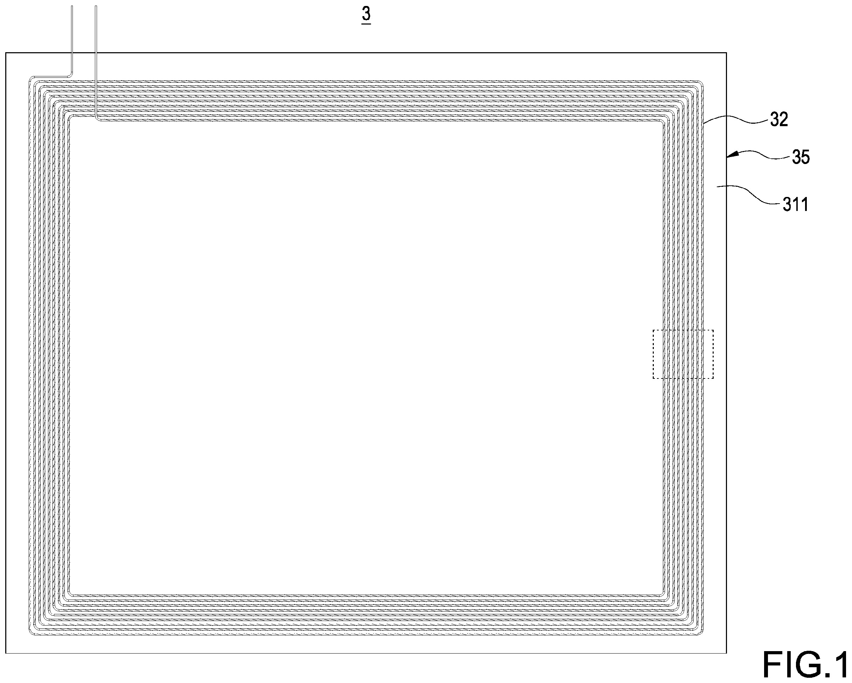

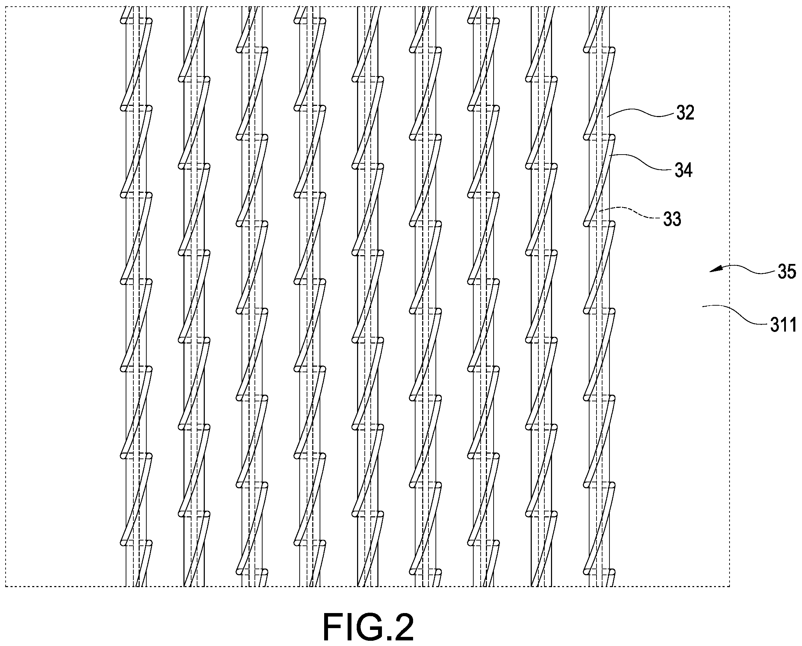

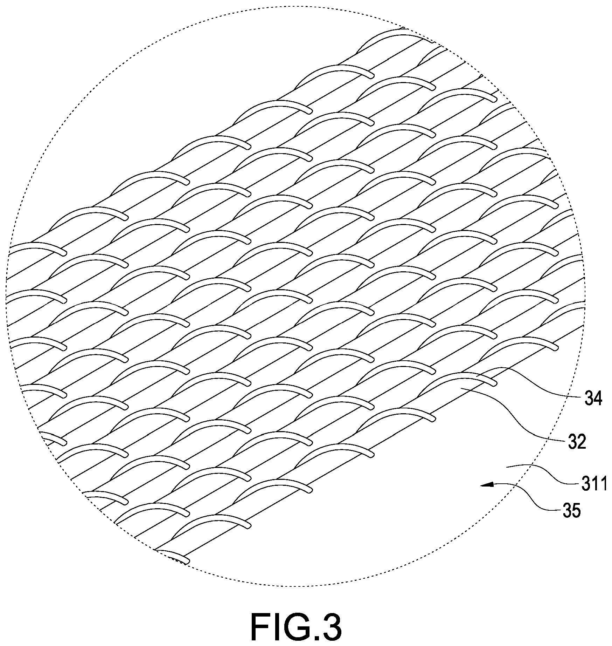

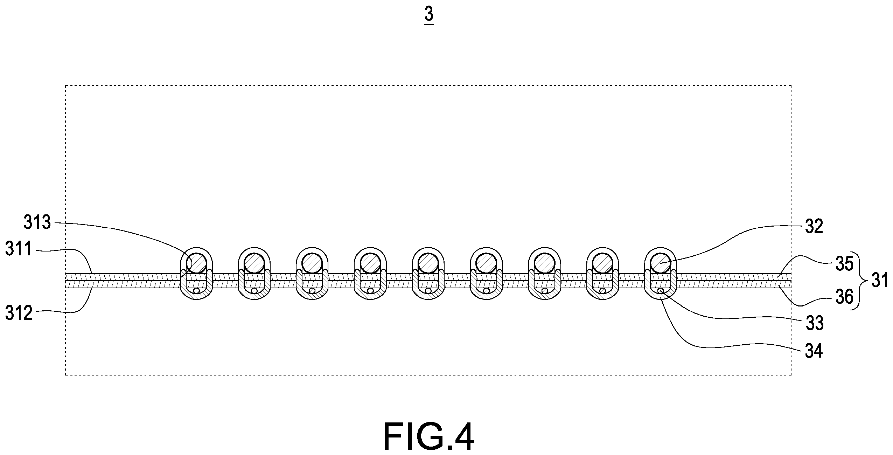

Please refer to FIGS. 1-6. The disclosure provides a wireless charging mouse pad and a coil module thereof. The wireless charging mouse pad mainly includes a first pad plate 1, a second pad plate 2, a coil module 3 and a surface layer 4. The coil module 3 mainly includes a fabric element 31, an induction coil 32, a lead wire 33 and a sewing wire 34.

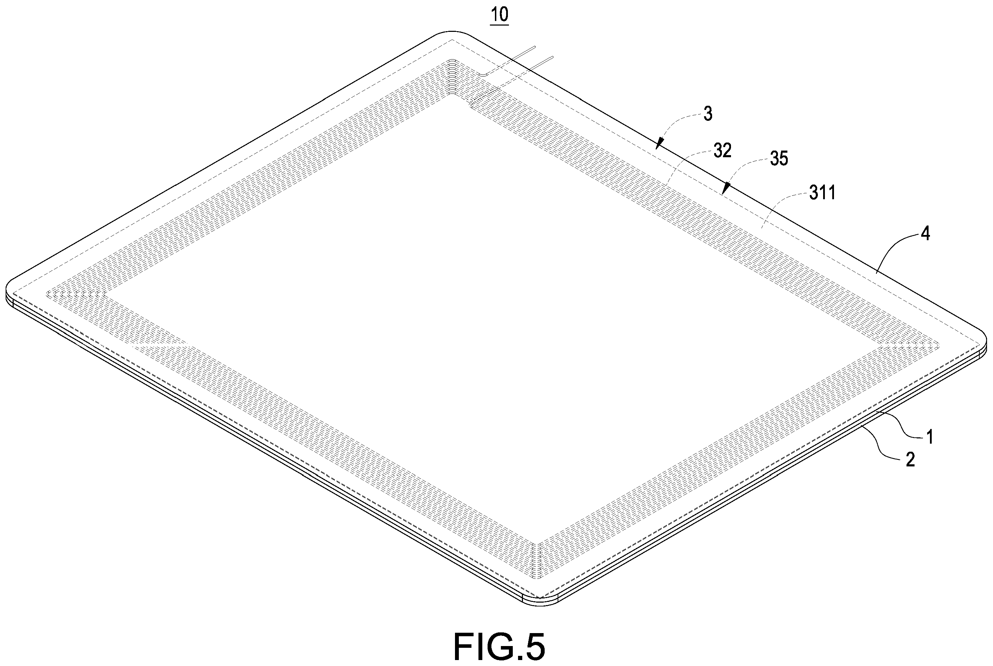

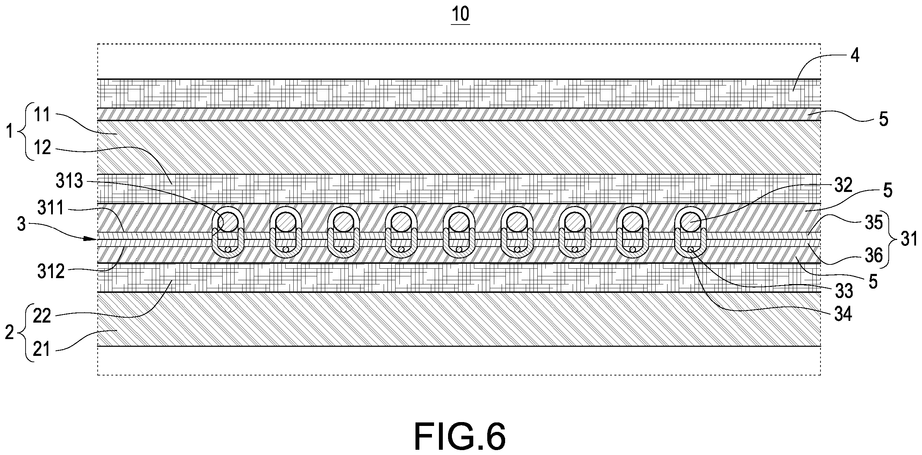

As shown in FIGS. 5 and 6, the first pad plate 1 and the second pad plate 2 may be made of the same material or different materials. The first pad plate 1 includes a first substrate 11 and a first fabric layer 12. The second pad plate 2 includes a second substrate 21 and a second fabric layer 22. Each of the first substrate 11 and the second substrate 21 can be made of one of rigid plastic, silicone, rubber, thermoplastic rubber (TPE), thermoplastic polyurethane (TPU), ethylene/vinyl acetate copolymer (EVA) and plastic foam material. The first fabric layer 12 and the second fabric layer 22 are separately formed by a textile fabric.

As shown in FIGS. 1-6, the coil module 3 includes a fabric element 31, an induction coil 32, a lead wire 33 and a sewing wire 34. The fabric element 31 is sandwiched between the first pad plate 1 and the second pad plate 2 so as to make the coil module 3 sandwiched between the first pad plate 1 and the second pad plate 2.

In addition, the fabric element 31 has a first face 311 and a second face 312, which are opposite to each other, and is disposed with multiple through holes 313 penetrating through the first face 311 and the second face 312. In detail, the fabric element 31 includes a fabric body 35 and an interlining 36, which are laminated. The first face 311 is formed on a surface of the fabric body 35, which is away from the interlining 36. The second face 312 is formed on a surface of the interlining 36, which is away from the fabric body 35. The multiple through holes 313 are disposed on the fabric body 35 and the interlining 36. The fabric body 35 is made of a textile fabric. The interlining 36 is made of a nonwoven fabric.

In addition, the induction coil 32 is superposed on the first face 311. The induction coil 32 is formed by winding a copper wire or a woven copper wire to be a loop shape. When the induction coil 32 is electrified, it can charge a wirelessly chargeable mouse (not shown in the figures) by the electromagnetic effect.

Also, the lead wire 33 is disposed on the second face 312 and arranged correspondingly to the induction coil 32. The sewing wire 34 is wound about the induction coil 32 and penetrates through the multiple through holes 313 to be tied with the lead wire 33 so that the induction coil 32 is sewed on the fabric element 31.

The surface layer 4 is covered on a surface of the first pad plate 1, which is away from the coil module 3. The surface layer 4 is made of a textile fabric or a plastic film. The surface layer 4 is used to let a mouse smoothly slide on its surface. The surface layer 4 may also have a pattern (not shown) to decorate the wireless charging mouse pad 10.

As shown in FIG. 6, the wireless charging mouse pad 10 of the disclosure further includes three adhesive layers 5. One of the adhesive layers 5 is disposed between the fabric body 35 and the first pad plate 1, another adhesive layer 5 is disposed between the interlining 36 and the second pad plate 2, and the remaining adhesive layer 5 is disposed between the surface layer 4 and the first pad plate 1 to make both the coil module 3 adhered between the first pad plate 1 and the second pad plate 2 and the surface layer 4 adhered on a surface of the first pad plate 1, which is away from the coil module 3.

In detail, in the embodiment, one adhesive layer 5 is disposed between the fabric body 35 and the first fabric layer 12, and another adhesive layer 5 is disposed between the interlining 36 and the second fabric layer 22, so as to improve the connective firmness of the fabric body 35 and the first pad plate 1 and the connective firmness of the interlining 36 and the second pad plate 2.

In addition, the first pad plate 1 can omit the first fabric layer 12 depending on situations, and the second pad plate 2 can omit the second fabric layer 22 depending on situations, so that one adhesive layer 5 is disposed between the fabric body 35 and the first substrate 11 and another adhesive layer 5 is disposed between the interlining 36 and the second substrate 21. The difference is that the firmness of the adhesive layer 5 directly attached on the first fabric layer 12 and the second fabric layer 22 is better than the firmness of the adhesive layer 5 directly attached on the first substrate 11 and the second substrate 21 only.

The production of the wireless charging mouse pad 10 of the disclosure is not limited by the embodiment shown in FIGS. 5-6. The first pad plate 1 and the second pad plate 2 of the wireless charging mouse pad 10 of the disclosure may also be integratedly formed into one piece. The first pad plate 1 and the second pad plate 2 may also sheathe outside the coil module 3 by the plastic one-piece injection molding. The surface layer 4 may also be coated on a surface of the first pad plate 1 by printing, which is away from the coil module 3.

As shown in FIGS. 1-6, when using the wireless charging mouse pad 10 and the coil module 3 of the disclosure, it uses the induction coil 32 sewed on the fabric element 31 by the lead wire 33 and the sewing wire 34 of the coil module 3 and the coil module 3 sandwiched between the first pad plate 1 and the second pad plate 2 to replace the manufacturing process of a related-art mouse pad which is disposed with multiple grooves to accommodate the coil to solve the problems of high manufacturing costs and defective finished products to accomplish advantages of reducing the manufacturing costs and increasing the yield rate of finished products.

## Claims

1. A wireless charging mouse pad comprising:
a first pad plate (1);
a second pad plate (2);
a coil module (3), sandwiched between the first pad plate (1) and the second pad plate (2), and comprising:
a fabric element (31), comprising a first face (311) and a second face (312), which are opposite to each other, and disposed with multiple through holes (313) penetrating through the first face (311) and the second face (312);
an induction coil (32), superposed on the first face (311);
a lead wire (33), disposed on the second face (312), and arranged correspondingly to the induction coil (32); and
a sewing wire (34), wound about the induction coil (32), and penetrating through the multiple through holes (313) to be tied with the lead wire (33) so that the induction coil (32) is sewed on the fabric element (31); and
a surface layer (4), covered on a surface of the first pad plate (1), which is away from the coil module (3),
**characterized in that** the first pad plate (1) and the second pad plate (2) sheathe outside the coil module (3) by plastic one-piece injection molding, and the surface layer (4) is coated on a surface of the first pad plate (1) by printing, which is away from the coil module (3).

2. The wireless charging mouse pad of claim 1, wherein the fabric element (31) comprises a fabric body (35) and an interlining (36), which are laminated, the first face (311) is formed on a surface of the fabric body (35), which is away from the interlining (36), the second face (312) is formed on a surface of the interlining (36), which is away from the fabric body (35), and the multiple through holes (313) are disposed on the fabric body (35) and the interlining (36).

3. The wireless charging mouse pad of claim 1, wherein the induction coil (32) is formed by winding a copper wire or a woven copper wire to be a loop shape.

4. A wireless charging mouse pad comprising:
a first pad plate (1);
a second pad plate (2);
a coil module (3), sandwiched between the first pad plate (1) and the second pad plate (2), and comprising:
a fabric element (31), comprising a first face (311) and a second face (312), which are opposite to each other, and disposed with multiple through holes (313) penetrating through the first face (311) and the second face (312);
an induction coil (32), superposed on the first face (311);
a lead wire (33), disposed on the second face (312), and arranged correspondingly to the induction coil (32); and
a sewing wire (34), wound about the induction coil (32), and penetrating through the multiple through holes (313) to be tied with the lead wire (33) so that the induction coil (32) is sewed on the fabric element (31); and
a surface layer (4), covered on a surface of the first pad plate (1), which is away from the coil module (3), wherein the fabric element (31) comprises a fabric body (35) and an interlining (36), which are laminated, the first face (311) is formed on a surface of the fabric body (35), which is away from the interlining (36), the second face (312) is formed on a surface of the interlining (36), which is away from the fabric body (35), and the multiple through holes (313) are disposed on the fabric body (35) and the interlining (36) further comprising three adhesive layers (5), wherein one of the adhesive layers (5) is disposed between the fabric body (35) and the first pad plate (1), another adhesive layer (5) is disposed between the interlining (36) and the second pad plate (2), and a remaining adhesive layer 5) is disposed between the surface layer (4) and the first pad plate (1) to make both the coil module (3) adhered between the first pad plate (1) and the second pad plate (2) and the surface layer (4) adhered on a surface of the first pad plate (1), which is away from the coil module (3).
**characterized in that** the first pad plate (1) comprises a first substrate (11) and a first fabric layer (12), the second pad plate (2) comprises a second substrate (21) and a second fabric layer (22), each of the first substrate (11) and the second substrate (21) is made of one of rigid plastic, silicone, rubber, thermoplastic rubber, TPE, and plastic foam material, the surface layer (4) is made of a textile fabric or a plastic film, the fabric body (35), the first fabric layer (12) and the second fabric layer (22) are separately formed by a textile fabric, the interlining (36) is made of a nonwoven fabric, one adhesive layer (5) is disposed between the fabric body (35) and the first fabric layer (12), and another adhesive layer (5) is disposed between the interlining (36) and the second fabric layer (22).

5. The wireless charging mouse pad of claim 4, wherein the induction coil (32) is formed by winding a copper wire or a woven copper wire to be a loop shape.

## Patentansprüche

1. Ein kabelloses Lademauspad, bestehend aus:
einer ersten Polsterplatte (1);
eine zweite Polsterplatte (2);
ein Spulenmodul (3), das zwischen der ersten Polsterplatte (1) und der zweiten Polsterplatte (2) angeordnet ist und umfasst:
ein Textilelement (31) mit einer ersten Fläche (311) und einer zweiten Fläche (312), die einander gegenüberliegen und mit mehreren Durchbohrungen (313) versehen sind, die die erste Fläche (311) und die zweite Fläche (312) durchdringen;
eine Induktionsspule (32), die auf der ersten Fläche (311) angeordnet ist;
einen Führungsdraht (33), der auf der zweiten Fläche (312) angeordnet ist und entsprechend der Induktionsspule (32) angeordnet ist; und
einen Nähdraht (34), der um die Induktionsspule (32) gewickelt ist und durch die mehrere Durchbohrungen (313) hindurchgeht, um mit dem Führungsdraht (33) verbunden zu werden, so dass die Induktionsspule (32) auf das Textilelement (31) genäht wird; und
eine Oberflächenschicht (4), die auf einer Oberfläche der ersten Polsterplatte (1) aufgebracht ist, die vom Spulenmodul (3) entfernt ist,
**dadurch gekennzeichnet, dass** die erste Polsterplatte (1) und die zweite Polsterplatte (2) das Spulenmodul (3) durch einteiliges Kunststoffspritzgießen ummanteln und die Oberflächenschicht (4) durch Bedrucken auf eine Oberfläche der ersten Polsterplatte (1) aufgebracht ist, die vom Spulenmodul (3) entfernt ist.

2. Das kabellose Lademauspad gemäß Anspruch 1, wobei das Textilelement (31) einen Textilkörper (35) und eine Einlage (36) umfasst, die laminiert sind, die erste Fläche (311) auf einer Oberfläche des Textilkörpers (35) ausgebildet ist, die von der Einlage (36) entfernt ist, die zweite Fläche (312) auf einer Oberfläche der Einlage (36) ausgebildet ist, die vom Textilkörper (35) entfernt ist, und die mehrere Durchbohrungen (313) auf dem Textilkörper (35) und der Einlage (36) angeordnet sind.

3. Das kabellose Lademauspad gemäß Anspruch 1, wobei die Induktionsspule (32) durch Wickeln eines Kupferdrahtes oder eines gewebten Kupferdrahtes zu einer Schleifenform gebildet ist.

4. Das kabellose Lademauspad, umfassend:
eine erste Polsterplatte (1);
eine zweite Polsterplatte (2);
ein Spulenmodul (3), das zwischen der ersten Polsterplatte (1) und der zweiten Polsterplatte (2) angeordnet ist und umfasst:
ein Textilelement (31), das eine erste Fläche (311) und eine zweite Fläche (312) umfasst, die einander gegenüberliegen und mit mehreren Durchbohrungen (313) versehen sind, die die erste Fläche (311) und die zweite Fläche (312) durchdringen;
eine Induktionsspule (32), die auf der ersten Fläche (311) angeordnet ist;
einen Führungsdraht (33), der auf der zweiten Fläche (312) angeordnet ist und entsprechend der Induktionsspule (32) angeordnet ist; und
einem Nähdraht (34), der um die Induktionsspule (32) gewickelt ist und durch die mehrere Durchbohrungen (313) hindurchgeht, um mit dem Führungsdraht (33) verbunden zu werden, so dass die Induktionsspule (32) auf das Textilelement (31) genäht wird; und
eine Oberflächenschicht (4), die auf einer Oberfläche der ersten Polsterplatte (1) aufgebracht ist, die vom Spulenmodul (3) entfernt ist, wobei das Textilelement (31) einen Textilkörper (35) und eine Einlage (36) umfasst, die laminiert sind, wobei die erste Fläche (311) auf einer Oberfläche des Textilkörpers (35) ausgebildet ist, die von der Einlage (36) entfernt ist, die zweite Fläche (312) auf einer Oberfläche der Einlage (36) ausgebildet ist, die vom Textilkörper (35) entfernt ist, und die mehrere Durchbohrungen (313) auf dem Textilkörper (35) und der Einlage (36) angeordnet sind, ferner umfassend drei Klebeschichten (5), wobei eine der Klebeschichten (5) zwischen dem Textilkörper (35) und der ersten Polsterplatte (1) angeordnet ist, eine weitere Klebeschicht (5) zwischen der Einlage (36) und der zweiten Polsterplatte (2) angeordnet ist und eine verbleibende Klebeschicht (5) zwischen der Oberflächenschicht (4) und der ersten Polsterplatte (1) angeordnet ist, um sowohl das Spulenmodul (3) zwischen der ersten Polsterplatte (1) und der zweiten Polsterplatte (2) als auch die Oberflächenschicht (4) auf einer Oberfläche der ersten Polsterplatte (1) des , die vom Spulenmodul (3) entfernt ist, zu verkleben.
**dadurch gekennzeichnet, dass** die erste Polsterplatte (1) ein erstes Substrat (11) und eine erste Textilschicht (12) umfasst, die zweite Polsterplatte (2) ein zweites Substrat (21) und eine zweite Textilschicht (22) umfasst, das erste Substrat (11) und das zweite Substrat (21) jeweils aus einem der folgenden Materialien bestehen: starrer Kunststoff, Silikon, Gummi, thermoplastischer Gummi, TPE (Thermoplastisches Elastomer) und Kunststoffschaumstoff, die Oberflächenschicht (4) aus einem Textilgewebe oder einer Kunststofffolie besteht, der Textilkörper (35), die erste Textilschicht (12) und die zweite Textilschicht (22) sind separat aus einem Textilgewebe gebildet, die Einlage (36) besteht aus einem Vliesstoff, eine Klebeschicht (5) ist zwischen dem Textilkörper (35) und der ersten Textilschicht (12) angeordnet, und eine weitere Klebeschicht (5) ist zwischen der Einlage (36) und der zweiten Textilschicht (22) angeordnet.

5. Das kabellose Lademauspad nach Anspruch 4, wobei die Induktionsspule (32) durch Wickeln eines Kupferdrahtes oder eines gewebten Kupferdrahtes zu einer Schleifenform gebildet ist.

## Revendications

1. Tapis de souris de charge sans fil, comprenant :
une première plaque rembourrée (1) ;
une seconde plaque rembourrée (2) ;
un module de bobine (3) disposé entre la première plaque rembourrée (1) et la seconde plaque rembourrée (2) et comprenant :
un élément textile (31) avec une première surface (311) et une seconde surface (312) qui se font face et sont pourvues de plusieurs perçages (313) qui traversent la première surface (311) et la seconde surface (312) ;
une bobine d'induction (32) disposée sur la première surface (311) ;
un fil de guidage (33) disposé sur la seconde surface (312) et disposé de manière correspondante à la bobine d'induction (32) ; et
un fil de couture (34) enroulé autour de la bobine d'induction (32) et passant à travers les multiples perçages (313) pour être relié au fil de guidage (33), de sorte que la bobine d'induction (32) est cousue sur l'élément textile (31) ; et
une couche de surface (4) appliquée sur une surface de la première plaque rembourrée (1) éloignée du module de bobine (3),
**caractérisé en ce que** la première plaque rembourrée (1) et la seconde plaque rembourrée (2) enveloppent le module de bobine (3) par moulage par injection de plastique en une seule pièce, et la couche de surface (4) est appliquée par impression sur une surface de la première plaque rembourrée (1) éloignée du module de bobine (3).

2. Tapis de souris de charge sans fil selon la revendication 1, dans lequel l'élément textile (31) comprend un corps textile (35) et un insert (36) qui sont laminés, la première surface (311) est formée sur une surface du corps textile (35) qui est éloignée de l'insert (36), la seconde surface (312) est formée sur une surface de l'insert (36) éloigné du corps textile (35), et les multiples perçages (313) sont disposés sur le corps textile (35) et l'insert (36) .

3. Tapis de souris de charge sans fil selon la revendication 1, dans lequel la bobine d'induction (32) est formée en enroulant un fil de cuivre ou un fil de cuivre tissé en forme de boucle.

4. Tapis de souris de charge sans fil comprenant :
une première plaque rembourrée (1) ;
une seconde plaque rembourrée (2) ;
un module de bobine (3) disposé entre la première plaque rembourrée (1) et la seconde plaque rembourrée (2) et comprenant :
un élément textile (31) comprenant une première surface (311) et une seconde surface (312) qui se font face et sont pourvues de plusieurs perçages (313) traversant la première surface (311) et la seconde surface (312) ;
une bobine d'induction (32) disposée sur la première surface (311) ;
un fil de guidage (33) disposé sur la seconde surface (312) et disposé de manière correspondante à la bobine d'induction (32) ; et
un fil de couture (34) enroulé autour de la bobine d'induction (32) et passant à travers les multiples perçages (313) pour être relié au fil de guidage (33), de sorte que la bobine d'induction (32) est cousue sur l'élément textile (31) ; et
une couche de surface (4) qui est appliquée sur une surface de la première plaque rembourrée (1) éloignée du module de bobine (3), l'élément textile (31) comprenant un corps textile (35) et un insert (36) qui sont laminés, la première surface (311) étant formée sur une surface du corps textile (35) éloignée de l'insert (36), la seconde surface (312) est formée sur une surface de l'insert (36) éloigné du corps textile (35), et plusieurs perçages (313) sont disposés sur le corps textile (35) et l'insert (36), comprenant en outre trois couches adhésives (5), l'une des couches adhésives (5) étant disposée entre le corps textile (35) et la première plaque rembourrée (1) , une autre couche adhésive (5) étant disposée entre l'insert (36) et la seconde plaque rembourrée (2) et une couche adhésive restante (5) étant disposée entre la couche de surface (4) et la première plaque rembourrée (1) afin de coller à la fois le module de bobine (3) entre la première plaque rembourrée (1) et la seconde plaque rembourrée (2) et la couche de surface (4) sur une surface de la première plaque rembourrée (1) du module de bobine (3) qui est éloignée de celui-ci.
**caractérisé en ce que** la première plaque rembourrée (1) comprend un premier substrat (11) et une première couche textile (12), la seconde plaque rembourrée (2) comprend un deuxième substrat (21) et une deuxième couche textile (22), le premier substrat (11) et le deuxième substrat (21) sont chacun constitués de l'un des matériaux suivants : plastique rigide, silicone, caoutchouc, caoutchouc thermoplastique, TPE (élastomère thermoplastique) et mousse plastique, la couche de surface (4) est constituée d'un tissu textile ou d'un film plastique, le corps textile (35), la première couche textile (12) et la deuxième couche textile (22) sont formés séparément à partir d'un tissu textile, l'insert (36) est constitué d'un non-tissé, une couche adhésive (5) est disposée entre le corps textile (35) et la première couche textile (12), et une autre couche adhésive (5) est disposée entre l'insert (36) et la deuxième couche textile (22).

5. Tapis de souris de charge sans fil selon la revendication 4, dans lequel la bobine d'induction (32) est formée en enroulant un fil de cuivre ou un fil de cuivre tissé en forme de boucle.
